(19) Europäisches Patentamt
European Patent Office
Office européen des brevets

(11) **EP 3 089 094 A1**

(12) **EUROPEAN PATENT APPLICATION**

(43) Date of publication:
**02.11.2016 Bulletin 2016/44**

(51) Int Cl.:
***G06Q 30/02*** *(2012.01)* ***G06Q 50/14*** *(2012.01)*

(21) Application number: **15290113.8**

(22) Date of filing: **29.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Amadeus S.A.S.**
**06410 Biot (FR)**

(72) Inventors:
• **Aragone, Matteo**
  **16100 Genoa (IT)**
• **Cognet, Simon**
  **06600 Antibes (FR)**
• **Pasquini, Ilaria**
  **06220 Vallauris-Golfe Juan (FR)**
• **Monteillet, Melinda**
  **06580 Pegomas (FR)**
• **Quarta, Giuliano**
  **06160 Juan Les Pins (FR)**
• **Lefouilli, Mehdi**
  **Cambridge, MA 02140 (US)**

(74) Representative: **Samson & Partner Patentanwälte mbB**
**Widenmayerstraße 6**
**80538 München (DE)**

(54) **IMPLEMENTING A DATABASE OF PRICING RECORDS**

(57) Systems, methods, and computer program products that utilize a database of flexible pricing records. A processor may generate data representative of pricing components and may also assigns relationships to the pricing components such that each pricing component is linked by one of the relationships with a different pricing component or with a total price. The pricing components and the total price may form a hierarchal arrangement based upon the relationships. The processor may build a flexible pricing record for the database based on the data representing the pricing components and the relationships.

FIG. 1

**Description**

TECHNICAL FIELD

The present invention generally relates to computer databases and, more particularly, to systems, methods, and computer program products for implementing a computer database of pricing records.

BACKGROUND

A computer database enables large amounts of electronic information to be organized in a logical manner. Such logical organization enables the computer database to quickly and efficiently return the information, or at a least a portion thereof, in response to a query received from a requesting system. The requesting system may then use the information returned from the database to facilitate a process executed by the system.

Computer databases are commonly utilized in the air-travel industry to store pricing records. A conventional pricing record generally includes pricing information for a service product relative to a particular customer. For example, a conventional pricing record for a passenger on a flight may include a base fare, taxes, processing fees, and a total cost for the flight.

Pricing records are usually implemented on a product-specific basis. In other words, a typical pricing record system may include a separate implementation of pricing records for each type of product. Each implementation of pricing records may be specifically programmed and designed for the particular product type to which the implementation pertains. For example, the typical pricing record system often includes separate computation logic for each implementation of pricing records that is specifically configured to calculate the total price for the product type of the implementation. Consequently, a pricing record utilized for one product type is not generally utilized for another product type. Hence, when a customer purchases service products of different types from an airline, such as a ticket on a flight and baggage handling, different pricing records may be usually created and stored for each product.

A need exists for systems, methods, and computer program products that implement a database of improved pricing records.

SUMMARY

In one embodiment, a system for implementing a dynamic pricing database includes a least one processor and a memory. The memory stores instructions that, upon execution by the at least one processor, cause the system to generate first data that represents a plurality of pricing components and assign a plurality of relationships to the pricing components. Each pricing component is linked by one of the relationships with a different pricing component or with a first total price in a hierarchal arrangement based on the relationships. The instructions, upon execution, further cause the system to build a flexible pricing record for the dynamic pricing database based on the first data representing the pricing components and the relationships.

In another embodiment, a method for implementing a dynamic pricing database includes generating, by at least one processor, first data that represents a plurality of pricing components and assigning, by the at least one processor, a plurality of relationships to the pricing components. Each pricing component is linked by one of the relationships with a different pricing component or with a first total price in a hierarchal arrangement based on the relationships. The method further includes building, by the at least one processor, a flexible pricing record for the dynamic pricing database based on the first data representing the pricing components and the relationships.

In another embodiment, a computer program product includes a non-transitory computer readable medium and computer instructions stored on the non-transitory computer readable medium. The computer instructions, upon execution by at least one processor, cause the at least one processor to generate first data that represents a plurality of pricing components and assign a plurality of relationships to the pricing components. Each pricing component is linked by one of the relationships with a different pricing component or with a first total price in a hierarchal arrangement based on the relationships. The computer instructions, upon execution, further cause the at least one processor to build a flexible pricing record for a dynamic pricing database based on the first data representing the pricing components and the relationships.

BRIEF DESCRIPTION OF THE SEVERAL VIEWS OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.

FIG. 1 is a schematic view of an exemplary operating environment that includes a plurality of computing systems in communication via a network.

FIG. 2 is a schematic view of an exemplary computing system.

FIG. 3 is a schematic view of an exemplary processing architecture that includes a pricing system and a dynamic pricing database.

FIG. 4 is a schematic view of an exemplary flexible pricing record of the dynamic pricing database of FIG. 3 that includes a plurality of pricing components and a total price.

FIG. 5 is a schematic view of the flexible pricing record of FIG. 4 with exemplary view types assigned to the pricing components and the total price.

FIG. 6 is a schematic view of at least part of another exemplary flexible pricing record.

FIG. 7 is an exemplary flowchart for creating a flexible pricing record that may be performed by the pricing system of FIG. 3.

FIG. 8 is a schematic view of the flexible pricing record of FIG. 4 with exemplary values for each of the pricing components and the total price.

FIG. 9 is a schematic view of another exemplary flexible pricing record.

FIG. 10 is an exemplary flowchart for modifying a flexible pricing record that may be performed by the pricing system of FIG. 3.

FIG. 11 is a schematic view of the flexible pricing record of FIG. 4 with an exemplary modification.

## DETAILED DESCRIPTION

One or more of the embodiments described herein may involve flexible pricing records. The implementation of flexible pricing records in a pricing record system may be generically designed so as to enable a single record to encompass one or more service products of any type. A service product may generally refer to a saleable unit associated with a provided service (e.g., a ticket on a flight, a ticket for rail travel, a night at a hotel, a rental car, a ticket to an activity such as a sporting event or a concert, etc.).

In general, a flexible pricing record may include a total price for one or more service products of varying types and the pricing components that make up the total price. Such pricing components may include base prices, fares, taxes, commissions, margins, discounts, service fees, penalties, commission on cancellation penalties, value added tax (VAT), or any other pricing component applicable towards the total price. A flexible pricing record may also include relationships that indicate the computation logic for calculating the total price. In addition, a flexible pricing record may include view types that indicate permission levels for viewing each of the pricing components or the record.

Agents, such as independent travel agents or service provider agents (i.e., sales agents employed directly with a service provider), may create a flexible pricing record to calculate a total price for a comprehensive solution involving one or more service products of varying types. For example, the compressive solution may involve a ticket to a concert, a night at a hotel, and a seat on a flight that all relate to the same excursion. The total price for the comprehensive solution may be dynamically calculated in real-time as pricing components are added to the flexible pricing record. In this way, the agent can immediately observe how the addition or removal of pricing components affects the total price of the travel solution. Such real-time calculation increases the speed and efficiency in which a computer provides prices to the agent. Moreover, the real-time calculation increases the speed and efficiency of the agent in building a solution for a customer and providing a new or updated price quote for the solution to the customer.

If the customer accepts a quoted price and decides to purchase a solution represented by a flexible pricing record, the agent and/or service providers responsible for the service products of the solution may utilize the flexible pricing record during the ticketing/reservation process. In particular, the flexible pricing record may serve as a basis for determining which pricing components and service products were involved in the calculation of the total price and also how they were utilized to calculate the total price. Such information may be helpful for invoicing the customer, issuing tickets or reservations, and collecting and distributing payment from the customer. Furthermore, the flexible pricing record may be transmitted to a middle-back office of the service provider for financial data analysis.

Flexible pricing records offer an improved mechanism for providing and maintaining pricing records for customers. In particular, because flexible pricing records may encompass a comprehensive solution involving multiple service products, regardless of each product's type, agents and/or service providers may avoid maintaining separate pricing records for each product type of a comprehensive solution. As a result, the number of records that needs to be stored by a pricing record system may be reduced, which may improve the functioning of the system by increasing electronic storage efficiency and reducing pricing record search time. Moreover, because the implementation of flexible pricing records is generically designed to encompass any product type, multiple implementations of pricing records, each designed for a specific product type, may no longer be necessary. Similarly, because flexible pricing records may include built-in computation logic via the relationships, systems may no longer need to receive advance programming of computation logic for each product type. Consequently, flexible pricing records may further increase electronic storage efficiency of a pricing record system and may reduce the time for bringing a new product type to market by eliminating the need to program new implementations.

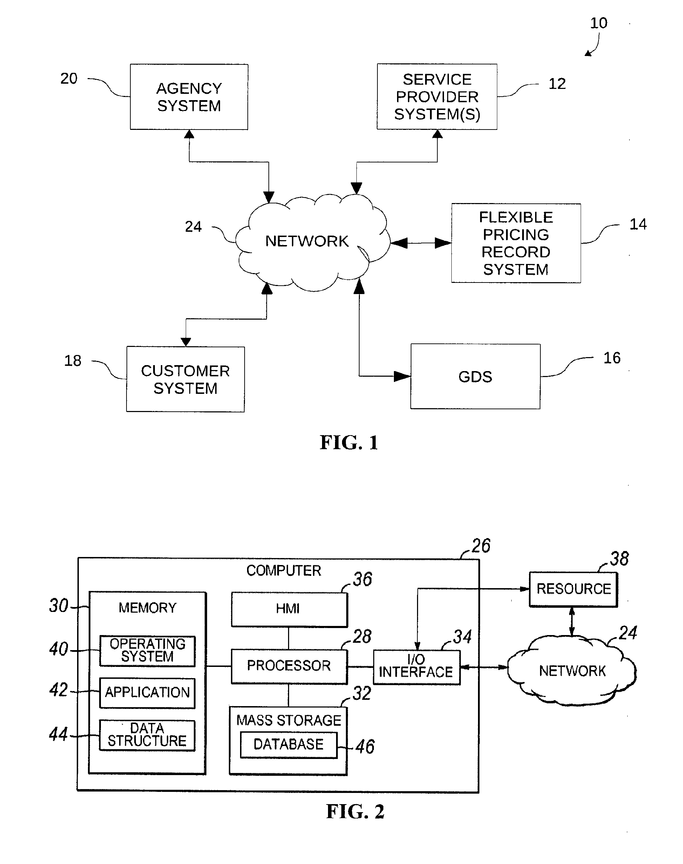

FIG. 1 illustrates an operating environment 10 that may include one or more service provider systems 12, a flexible pricing record system 14, a global distribution system ("GDS") 16, a customer system 18, and/or an agency system 20. Each of these systems may communicate with one another through a network 24, such as the Internet. Furthermore one or more of these systems may be omitted from the operating environment 10 or combined. One or more of these systems may also be configured to communicate with one another via a direct wired or wireless connection.

A service provider system 12 may include any system of a service provider, such as an airline, train operator, hotel, car rental service, venue, concert promoter, and the like, that enables the service provider to manage the sale of service products. The customer system 18 or the agency system 20 may connect to a service provider system 12, such as via the network 24, to search available inventory, book service products, and manage previous reservations of service products. In general, the customer system 18 may include any end-user system, such as a passenger's computer or mobile phone. The agency system 20 may include any system of an agent, such as an independent travel agent or a service provider agent, that facilitates the searching, booking, and managing operations on an end-user's behalf.

In one example, the one or more service provider systems 12 may include the computer reservation system ("CRS") of an airline. The CRS may maintain a database of available inventory of the airline, such as open seats on a flight, and provide yield management services for the airline. The customer system 18 or the agency system 20 may thus connect to the CRS to search for available flight itineraries and purchase a ticket in order to book travel. At the time of purchase, the CRS may create a reservation record relating to the purchase. In particular, the CRS may create a passenger name record ("PNR") that includes information about the flight itinerary(ies) and the passenger(s) associated with the reservation.

The GDS 16 may manage the sale of service products from multiple service providers. In particular, the GDS 16 may maintain real-time connections to the current inventory of the one or more service provider systems 12. Alternatively, the GDS 16 may cache the inventory of the service provider systems 12 in a local database. Upon receiving a search request for available service products, such as from the customer system 18 or the agency system 20, the GDS 16 may query the inventory of the appropriate service providers for service products matching the request. In this way, the customer system 18 or the agency system 20 may search for available service products across multiple service providers via a single connection to the GDS 16. The GDS 16 may also enable the customer system 18 or the agency system 20 to purchase service products from multiple service providers via a single connection to the GDS 16. For example, a customer may connect to the GDS 16, such as via a personal computer or mobile computing device, to purchase a ticket for a flight, a night at a hotel, and a rental car that all relate to the same trip. Like the CRS described above, the GDS 16 may also maintain reservation records, such as PNRs, and each reservation record may include data elements reflecting one or more service products purchased by one or more passengers through the GDS 16.

The flexible pricing record system 14 may be configured to generate a flexible pricing record based on information received from one or more of the other systems in the operating environment 10. In one example, the flexible pricing record system 14 may be configured to automatically generate a flexible pricing record in response receiving a pricing request from the customer system 18 or the agency system 20. The pricing request may include one or more service products for the flexible pricing record and information about a customer. In response to receiving the pricing request, the flexible pricing record system 14 may be configured to query the service provider systems 12 or the GDS 16 for current pricing components specifically relating to the one or more service products. For example, if the service product is a flight, then the related pricing components may include a current base fare for the flight and current airline processing fees. Thereafter, the flexible pricing record system 14 may build the flexible pricing record based on the received pricing components and the request. For example, the flexible pricing record system 14 may calculate a total price for the one or more service products of the request based on the retrieved pricing components. The flexible pricing record system 14 may then store the flexible pricing record in a dynamic pricing record database and/or transmit the flexible pricing record to the customer system 18 or the agency system 20 for review.

After the flexible pricing record is generated, an agent may further customize the flexible pricing record by instructing the flexible pricing record system 14 to add additional pricing components that are relevant to the agent. For example, the agent may instruct the flexible pricing record system 14 to add pricing components for state taxes, a margin, a commission, or any other pricing component that the agent desires. The agent may utilize a graphical user interface ("GUI") on the agency system 20, which may be provided by the flexible pricing record system 14, to add these additional pricing components. Additionally or alternatively, all or part of the flexible pricing record system 14 may be integrated with the agency system 20, and/or the agent may access the flexible pricing record system 14 directly. The agent may also utilize a GUI to instruct the flexible pricing record system 14 to add or customize relationships, view types, and rules for the pricing components, which are described in more detail below.

After adding the pricing components, relationships, view types, and/or rules to the flexible pricing record, the agent may trigger an automatic calculation of a total price for flexible pricing record by the flexible pricing record system 14 based on all of pricing components, relationships, etc. Alternatively, and as described above, the flexible pricing record system 14 may calculate the total price in real-time as each pricing component is added to the flexible pricing record. Once calculated, the total price becomes part of the flexible pricing record. The agent may then provide the flexible pricing record and/or the total price to a customer as a quote for the one or more service products represented by the record.

In addition or alternatively to automatically generating flexible pricing records, the flexible pricing record system 14 may enable an agent, such as via a GUI provided on the agency system 20, to manually generate a flexible pricing record. In particular, instead of the flexible pricing record system 14 retrieving current pricing components for one or more service products from the service provider systems 12 or the GDS 16, an agent may manually provide these pricing components to the flexible pricing record system 14. The flexible pricing record system 14 may thus calculate a total price and build the flexible pricing record based on the agent-provided data. Because all of the pricing components are manually provided by the agent, the flexible pricing record system 14 may be unable to guarantee the accuracy of the pricing components relating to the one or more service products. Conversely, when a flexible pricing record is automatically generated using current pricing components from the service provider systems 12 or the GDS 16, the flexible pricing record system 14 may be able to guarantee the accuracy of these pricing components for the flexible pricing record.

If a customer accepts the total price indicated by a flexible pricing record and purchases the represented one or more service products, the flexible pricing record may serve as the basis for reservation processes. In particular, the flexible pricing record may be utilized for purposes such as invoicing the customer, issuing tickets, reporting, and collecting and distributing payments from the customer. Moreover, the flexible pricing record may be transmitted to a middle-back office for utilization in financial data analysis.

Referring now to FIG. 2, the service provider systems 12, the flexible pricing record system 14, the GDS 16, the customer system 18, and/or the agency system 20 may be implemented on one or more computer devices or systems, such as exemplary computer system 26. The computer system 26 may include a processor 28, a memory 30, a mass storage memory device 32, an input/output (I/O) interface 34, and a Human Machine Interface (HMI) 36. The computer system 26 may also be operatively coupled to one or more external resources 38 via the network 24 or I/O interface 34. External resources may include, but are not limited to, servers, databases, mass storage devices, peripheral devices, cloud-based network services, or any other suitable computer resource that may used by the computer system 26.

The processor 28 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 30. Memory 30 may include a single memory device or a plurality of memory devices including, but not limited, to read-only memory (ROM), random access memory (RAM), volatile memory, non-volatile memory, static random access memory (SRAM), dynamic random access memory (DRAM), flash memory, cache memory, or any other device capable of storing information. The mass storage memory device 32 may include data storage devices such as a hard drive, optical drive, tape drive, non-volatile solid state device, or any other device capable of storing information.

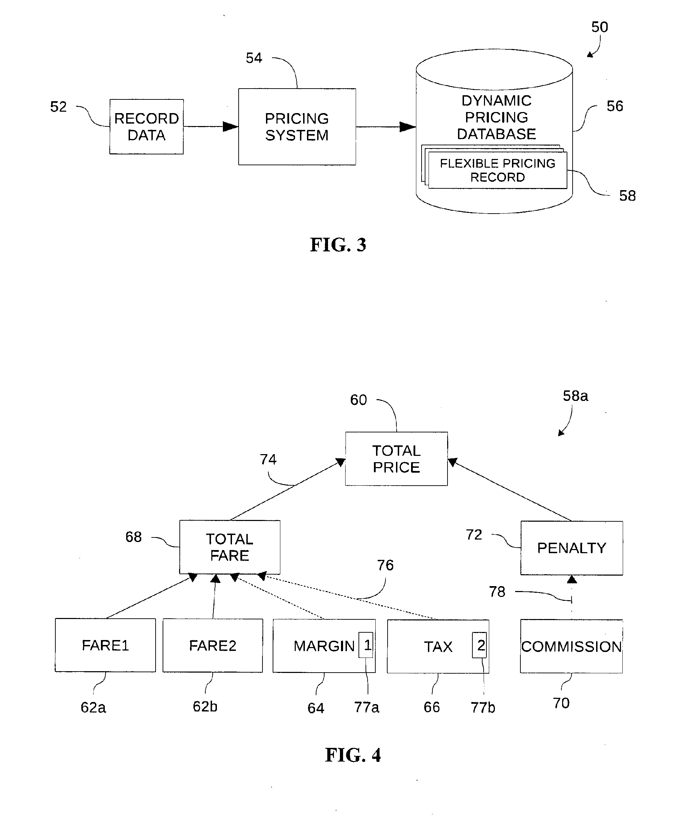

Processor 28 may operate under the control of an operating system 40 that resides in memory 30. The operating system 40 may manage computer resources so that computer program code embodied as one or more computer software applications, such as an application 42 residing in memory 30, may have instructions executed by the processor 28. For example, the application 42 may implement all or part of the pricing system 54 (FIG. 3). In an alternative embodiment, the processor 28 may execute the application 42 directly, in which case the operating system 40 may be omitted. One or more data structures 44 may also reside in memory 30, and may be used by the processor 28, operating system 40, or application 42 to store or manipulate data.

The I/O interface 34 may provide a machine interface that operatively couples the processor 28 to other devices and systems, such as the network 24 or external resource 38. The application 42 may thereby work cooperatively with the network 24 or external resource 38 by communicating via the I/O interface 34 to provide the various features, functions, applications, processes, or modules comprising embodiments of the invention. The application 42 may also have program code that is executed by one or more external resources 38, or otherwise rely on functions or signals provided by other system or network components external to the computer system 26. Indeed, given the nearly endless hardware and software configurations possible, persons having ordinary skill in the art will understand that embodiments of the invention may include applications that are located externally to the computer system 26, distributed among multiple computers or other external resources 38, or provided by computing resources (hardware and software) that are provided as a service over the network 24, such as a cloud computing service.

The HMI 36 may be operatively coupled to the processor 28 of computer system 26 in a known manner to allow a user to interact directly with the computer system 26. The HMI 36 may include video or alphanumeric displays, a touch screen, a speaker, and any other suitable audio and visual indicators capable of providing data to the user. The HMI 36 may also include input devices and controls such as an alphanumeric keyboard, a pointing device, keypads, pushbuttons, control knobs, microphones, etc., capable of accepting commands or input from the user and transmitting the entered input to the processor 28.

A database 46 may reside on the mass storage memory device 32, and may be used to collect and organize data used by the various systems and modules described herein. The database 46 may include data and supporting data structures that store and organize the data. In particular, the database 46 may be arranged with any database organization or structure including, but not limited to, a relational database, a hierarchical database, a network database, or combinations thereof. A database management system in the form of a computer software application executing as instructions on the processor 28 may be used to access the information or data stored in records of the database 46 in response to a query, where a query may be dynamically determined and executed by the operating system 40, other applications 42, or one or more modules. In one embodiment, the database 46 may comprise a dynamic pricing database 56 (FIG. 3) that includes previously created flexible pricing records.

FIG. 3 illustrates a processing architecture 50 that may be provided by one or more of the systems of the operating environment 10. The processing architecture 50 may include a pricing system 54 and a dynamic pricing database 56. The dynamic pricing database 56 may be hosted on at least one data storage device, such as the mass storage memory device 32 of the computer system 26, and may store one or more flexible pricing records 58.

The pricing system 54 may be configured to build and/or modify a flexible pricing record 58 based on received record data 52. The received record data 52 may include instructions from a customer or agent, such as through a GUI provided on the customer system 18 or the agency system 20, for the creation or modification of the flexible pricing record 58. In one aspect, the record data 52 may include a pricing request for one or more service products in which a price quote is desired. For example, the pricing request may include a ticket on a flight, a room at a hotel, and a ticket to a concert. The record data 52 may also include pricing components for the one or more service products of the pricing request, such as from the one or more service provider systems 12 or the GDS 16, that may be automatically retrieved by the pricing system 54 in response to receiving the pricing request. The record data 52 may further include instructions from a customer or agent to modify or add user-provided pricing components, relationships, and/or view types to the flexible pricing record 58. For example, a customer or agent may have manually created custom pricing components, relationships, and/or view types for inclusion in the flexible pricing record 58.

A connection for data communication between the pricing system 54 and at least one data storage device that hosts the dynamic pricing database 56 may be established. In this way, the dynamic pricing database 56 may be able to retrieve a flexible pricing record 58 from the dynamic pricing database 56 for review or modification, such as by an agent or customer. In addition, the pricing system 54 may be able to transmit a new or modified flexible pricing record 58 to the at least one storage device for inclusion in the dynamic pricing database 56.

The processing architecture 50 may provide a flexible model for the creation of pricing records that enables a single pricing record to encompass one or more service products of any type. For example, a single flexible pricing record 58 may encompass a ticket on a flight and one or more nights at a hotel. For the flight, the flexible pricing record 58 may include pricing components that represent base fares and processing fees. The same flexible pricing record 58 may also include pricing components that represent rates and fees for the hotel broken down per night. The processing architecture 50 may utilize all of these pricing components to calculate a total price for the flight and the hotel.

In general, the pricing components of the flexible pricing record 58 may include any monetary value or percentage, such as a tax, that may make up a total price for one or more service products. The pricing components may also include one or more interim total prices for each of the one or more service products. For example, in addition to the pricing components described above, the flexible pricing record 58 may include a pricing component that represents a total price for the flight, and a pricing component that represents the total price for the hotel. These interim total pricing components may then be combined to compute the total price for the flexible pricing record 58.

The pricing components of a flexible pricing record 58 may be organized and displayed to a user in a hierarchal arrangement with the total price at the top of the hierarchy or tree. Such an arrangement may enable the user to precisely determine which pricing components apply to each service product, the total price of each service product, the total price for all of the service products, and/or the computation logic behind the total price for all of the service products. In general, the flexible pricing record 58 is not limited to any particular type or number of service products. A user, such as an agent, may thus provide record data 52 to the processing architecture 50, such as via a GUI provided on the agency system 20, to build a highly customized flexible pricing record 58 that provides a total price for a unique combination of one or more service products.

FIG. 4 illustrates a flexible pricing record 58a that may be generated and stored by the processing architecture 50 for a round-trip flight. It will be understood that one or more of the features of the flexible pricing record 58a may be applied to any flexible pricing record 58 generated by the processing architecture 50. The flexible pricing record 58a may have been generated by an agent using the agency system 20 of the operating environment 10.

The flexible pricing record 58a may include one or more pricing components and a total price 60 for the round-trip flight. Some of the pricing components may be particularly relevant to a service provider, such as the airline. For example, the flexible pricing record 58a may include fare pricing components 62a and 62b that represent base fares for each segment of the round-trip flight. The FARE1 pricing component 62a may represent the base fare for a flight from an origin to a destination, and the FARE2 pricing component 62b may represent the base fare for a flight from the destination back to the origin. The flexible pricing record 58a may also include pricing components that represent processing fees charged by the airline, such as a penalty pricing component 72 applied in response to changing a pre-existing reservation. In addition, some of the pricing components of the flexible pricing record 58a may be particularly relevant to an agent. For example, the flexible pricing record 58a may include a margin pricing component 64, a tax pricing component 66, and a commission pricing component 70. Each of these pricing components may have been added to the flexible pricing record 58a by the agent. The flexible pricing record 58 may also include an interim total fare pricing component 68 that represents the total price of the flight without the penalty pricing component 72.

The flexible pricing record 58a may also include links or relationships, such as relationships 74, 76, and 78. Each of the pricing components may be linked by a relationship with a different pricing component or with the total price 60. As previously described, the pricing components may be organized and displayed in a hierarchal arrangement based on the relationships. Such an arrangement may enable a user, such as a customer or an agent, to precisely determine which pricing components apply to which service product, the total price of each service product, the total price for all of the service products, and/or the computation logic behind the total price for all of the service products. For example, a user viewing the flexible pricing record 58a may determine that the total cost for the round-trip flights alone, or the interim total fare pricing component 68, includes the FARE1 pricing component 62a, the FARE2 pricing component 62b, the margin pricing component 64, and the tax pricing component 66. Moreover, a user may determine that the total price 60 for the entire solution encompassed by the flexible pricing record 58a includes the interim total fare pricing component 68 and the penalty pricing component 72. The relationships and hierarchal arrangement may also provide computation logic for the pricing system 54 when computing the total price 60. Because the computation logic may be built directly into the flexible pricing record 58, the pricing system 54 may not need multiple implementations of preprogrammed computation logic for each different product type.

Each relationship may include a link type that indicates the effect of a pricing component on the different pricing component or the total price 60 to which the pricing component is linked. One relationship, which is depicted in the flexible pricing record 58a by a solid arrow extending from a pricing component, may indicate that the pricing component is added to the different pricing component or the total price 60 to which the arrow is pointed. For example, the relationship 74 of the flexible pricing record 58a may indicate that the interim total fare pricing component 68 is included in or added to the total price 60.

Another relationship, which is depicted in the flexible pricing record 58a by a dotted arrow extending from a pricing component, may indicate that the pricing component is applied on the different pricing component or the total price 60 to which the arrow is pointed. For example, the relationship 76 may indicate that the tax pricing component 66 is applied on the interim total fare pricing component 68. More particularly, the relationship 76 may indicate that the tax pricing component 66 is multiplied with the interim total fare pricing component 68 and then added to the interim total fare pricing component 68.

Another relationship, which is depicted in the flexible pricing record 58a by a dot/dash arrow extending from a pricing component, may indicate that the pricing component serves an informative purpose with respect to the different pricing component or the total price 60 to which the arrow is pointed. In this way, a pricing component linked by the dot/dash arrow may not actually influence the total price 60. For example, the relationship 78 may indicate that the commission pricing component 70 bears an informative relationship with the penalty pricing component 72. However, the value of the commission pricing component 70 may have no effect on the penalty pricing component 72 or the total price 60. Rather, the commission pricing component 70 may be for informative purposes only.

The processing architecture 50 may enable a user, such as a customer or agent, to manually create custom pricing components that are specific to a certain type of service product. Likewise, the processing architecture 50 may enable the user to manually define and apply custom link types other than those that are described above.

The relationships may also include order indicators 77a and 77b that indicate an order of application of at least two pricing components when calculating the total price 60. For example, as illustrated in the flexible pricing record 58a, the relationships for the margin pricing component 64 and the tax pricing component 66 may include order indicators 77a and 77b respectively. The order indicators 77a and 77b direct the pricing system 54 to apply the margin pricing component 64 before the tax pricing component 66 when calculating the interim total fare pricing component 68 for the total price 60. If multiple pricing components are applied on the same different pricing component or the total price 60, and such order indicators are not present, then each of the multiple pricing components may be applied on the present value of the different pricing component or the total price 60 before the other pricing components of the multiple pricing components are applied.

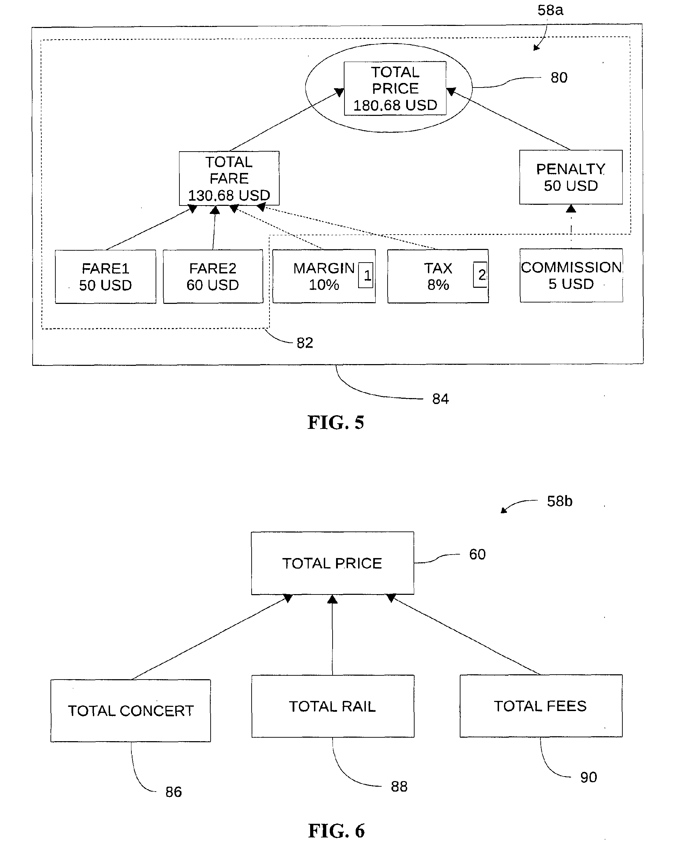

Referring to FIG. 5, an agent, customer, or service provider may desire to view and/or modify the flexible pricing record 58a. The pricing system 54 may thus be configured to cause the display of the flexible pricing record 58a, such as on the HMI 36 of the computer system 26, in the hierarchal arrangement based on the relationships. In this way, and as described above, a user may precisely determine which pricing components apply to which service product, etc. The flexible pricing record 58a may include several customized views and each customized view may be associated with a certain type of user. In this way, a particular user may only have access to view those parts of the flexible pricing record 58a that are relevant to that particular user. Such customized views may improve the display of pricing records by ensuring that the viewing user is not shown non-relevant information and/or potentially confusing information, and can permit different sections of the pricing record to be displayed to different types of users.

More particularly, one or more view types may be assigned as an attribute or property to each of the pricing components and the total price 60 of the flexible pricing record 58a. In one embodiment, the view types may be assigned by a travel agent, who may hide from of the pricing components from other users, such as providers or customers. Each view type may be associated with one or more permission levels for accessing and viewing the pricing components or the total price 60 to which the view type is assigned. In one embodiment, the view types may permit the entire flexible pricing record 58a to be displayed to one type or classification of user while only portions, and optionally different portions, of the flexible pricing record 58a may be displayed to other types or classifications of users with the remaining portions hidden. However, the permission levels associated with the view types may permit all types of users to view the total price 60 and/or certain pricing components as common or shared details.

The view types assigned to the pricing components and the total price 60 may be selected from a group consisting of a customer view 80, a provider view 82, and an agent view 84. For example, the pricing components of the flexible pricing record 58a may include a set of assigned view types such that a customer accessing the flexible pricing record 58a may only view the total price 60 with the remaining details hidden; a service provider accessing the flexible pricing record 58a may, in addition to the total price 60, view the pricing components and relationships particularly relevant to the service provider, such as the fare pricing components and the penalty pricing component with the remaining details hidden; and an agent accessing the flexible pricing record 58a may view the entire flexible pricing record 58a, including the margin, tax, and commission pricing components that may have been manually created and added to the flexible pricing record 58a by the agent. The flexible pricing record 58a may constitute a single pricing record that can be shared among different users with permission levels that restrict the information that is displayed to any particular user, and in which the owner of the pricing record (e.g., the travel agent) can decide the permission levels for the different users. In one embodiment, one or more of the pricing components may be hidden from view by one user (e.g., the customer) and taken into account when computing the total price 60 displayed to this user, and the same one or more components may be hidden from view by a different user (e.g., the provider) and not taken into account in the computation of the total price 60 displayed to the different user.

FIG. 6 illustrates at least part of a flexible pricing record 58b that may be generated by the processing architecture 50. It will be understood that one or more of the features of the flexible pricing record 58b may be applied to any flexible pricing record 58 generated by the processing architecture 50. As previously described, the flexible pricing record 58b may include interim total pricing components, such as an interim total concert pricing component 86, an interim total rail pricing component 88, and an interim total fees pricing component 90. Each of the interim total pricing components may be linked by a relationship to the total price 60, where the relationship indicates that the interim total pricing components are included in the total price 60. The flexible pricing record 58b may further include other pricing components that are lower in the hierarchy, and that are linked to and make up the interim total pricing components. In this way, the pricing system 54 enables the creation of a flexible pricing record 58b that aggregates the total prices of multiple service products into one flexible pricing record 58b. In addition, given the flexibility of the pricing components, the number and type of service products that may be aggregated in a single flexible pricing record 58b may be generally unconstrained.

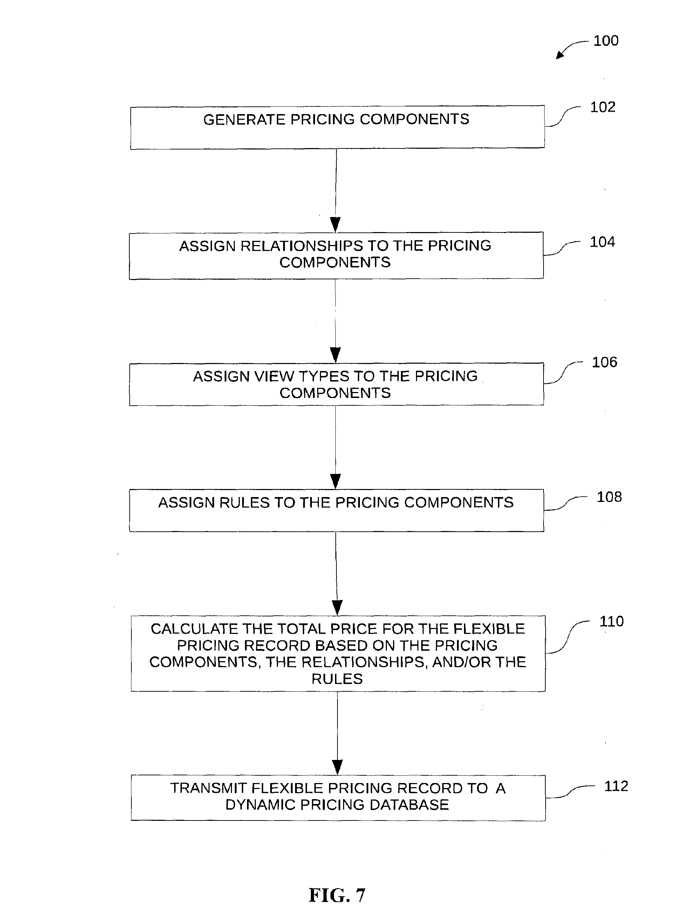

FIG. 7 illustrates a process 100 for creating a flexible pricing record 58 that may be performed by the processing architecture 50. In block 102, data that represents the pricing components may be generated for the flexible pricing record 58. In block 104, relationships may be assigned to each of the pricing components; in block 106, view types may be assigned to the pricing components; and in block 108, rules may be assigned to the pricing components. In general, a rule assigned to a pricing component may include a condition that need be satisfied for that pricing component to influence calculation of the total price 60. In this way, calculation of the total price 60 may only be based on such a pricing component if the rule assigned to the pricing component is satisfied. Rules are described in more detail below.

In one embodiment, instructions for blocks 102 to 108 may be received at the pricing system 54 from the agency system 20 or the customer system 18 of the operating environment 10. In particular, a connection for data communication may be established between the pricing system 54 and the agency system 20 or between the pricing system 54 and the customer system 18. The pricing system 54 may then generate the data representative of the pricing components, assign the relationships, assign the view types, and/or assign the rules based on information received from the agency system 20. For example, the agency system 20 or the customer system 18 may transmit a pricing request that includes one or more service products, and the pricing system 54 may automatically generate pricing components and assign relationships, view types, and/or rules to the pricing components based on information retrieved from the service provider systems 12 or the GDS 16 based on the search request. Additionally or alternatively, the agency system 20 or the customer system 18 may transmit manually created and/or customized pricing components, relationships, view types, and/or rules to the pricing system 54 for the flexible pricing record 58.

The pricing system 54 may then build the flexible pricing record 58 based on the data representing the pricing components, the relationships, the view types, and/or the rules. In particular, in block 110, the total price 60 for the flexible pricing record 58 may be calculated based on the pricing components, the relationships, and/or the rules. This calculation may be manually triggered by a customer or agent. Alternatively, the calculation may take place in real-time as each of the pricing components, relationships, and/or rules are provided for the flexible pricing record 58. Once calculated, the original data representative of the pricing components may be transformed into new data by inserting the calculated total price in the original data. Moreover, building the flexible pricing record 58 may include transforming the original data into new data by inserting the relationships, view types, and/or rules into the original data. The final flexible pricing record 58 may be based on the new data.

In block 112, the flexible pricing record 58 may be transmitted to at least one data storage device, such as the mass storage memory device 32 of the computer system 26, that hosts the dynamic pricing database 56 for inclusion in the dynamic pricing database 56. A data record corresponding to the flexible pricing record 58 may be created in the dynamic pricing database 56. As previously described, the flexible pricing record 58 may be retrieved from the dynamic pricing database 56 for review and manipulation, such as by an agent or customer, may be used in the ticketing process, and/or may be used in financial data analysis.

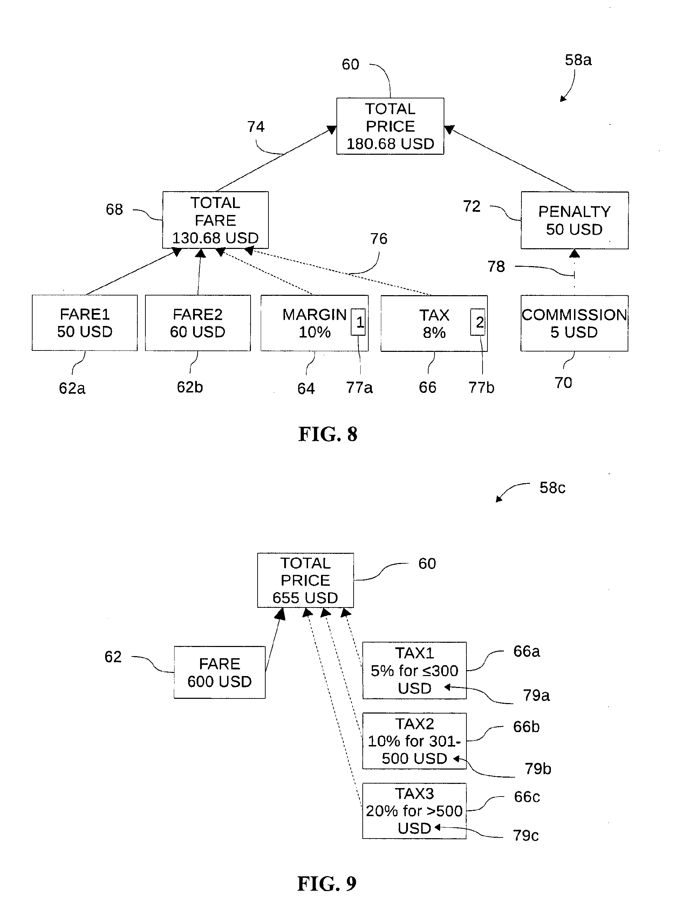

Calculation of the total price 60 for a flexible pricing record 58 will now be described in more detail with reference to FIGS. 8 and 9. FIG. 8 illustrates the flexible pricing record 58a of FIG. 4, but now with values for each of the pricing components. Calculation of the total price 60 based on the pricing components and the relationships of flexible pricing record 58a may take place as follows:

$$\text{TOTAL PRICE} = \text{TOTAL FARE} + \text{PENALTY}$$

$$\text{TOTAL FARE} = (\text{FARE1} + \text{FARE2}) \times \text{MARGIN} \times \text{TAX}$$

$$\text{FARE1} + \text{FARE2} = 110 \text{ USD}$$

$$110 \times \text{MARGIN} = 110 * 1.1 = 121 \text{ USD}$$

$$121 \times \text{TAX} = 121 * 1.08 = 130.68 \text{ USD}$$

$$\text{TOTAL PRICE} = 130.68 + \text{PENALTY} = 30.68 + 50 = 180.68 \text{ USD}$$

In the above calculation, "+" indicates that the subsequent pricing component is added to the preceding pricing component, "x" indicates that the subsequent pricing component is applied on the preceding pricing component, and "*" is a multiplication function derived from the "x" indicator.

Hence, the total price 60 calculated for the flexible pricing record 58a may be 180.68 USD. The commission pricing component 70 may be linked by a relationship 78 that indicates the commission pricing component 70 serves informative purposes only. Consequently, the commission pricing component 70 may not influence calculation of the total price 60.

FIG. 9 illustrates a flexible pricing record 58c that may be generated by the processing architecture 50. It will be understood that one or more of the features of the flexible pricing record 58c may be applied to any flexible pricing record 58 generated by the processing architecture 50. The flexible pricing record 58c may include a fare pricing component 62, tax pricing components 66a, 66b, and 66c, and conditions or rules 79a, 79b, and 79c. As illustrated, each of the tax pricing components 66a, 66b, and 66c may be linked by a relationship to a different pricing component or the total price 60. Moreover, each of the tax pricing components 66a, 66b, and 66c may include a percentage that is applied on the different pricing component or the total price 60 only if rules 79a, 79b, and 79c are satisfied respectively.

The rules 79a, 79b, and 79c may include one or more threshold values or ranges that the different pricing component or the total price 60 need exceed or meet for the pricing component having the rule to be applied. In one example, the rules 79a, 79b, and 79c may indicate that the respective tax pricing components 66a, 66b, and 66c are only applied to certain values of the different pricing component or the total price 60. As illustrated, for example, the rules 79a, 79b, and 79c indicate that the tax pricing component 66a may be applied on the first 300 USD of the total price 60, the tax pricing component 66b may be applied on values of the total price 60 inclusively between 301 and 500 USD, and the tax pricing component 66c may be applied on values of the total price 60 exceeding 500 USD. Hence, the total price 60 for the flexible pricing record 58c may be calculated as follows:

$$TOTAL\ PRICE = (FARE \times TAX1) + (FARE \times TAX2) + (FARE \times TAX3)$$

$$FARE \times TAX1 = 300*1.05 = 315\ USD$$

$$FARE \times TAX2 = 200*1.1 = 220\ USD$$

$$FARE \times TAX3 = 100*1.2 = 120\ USD$$

$$TOTAL\ PRICE = 315 + 220 + 120 = 655\ USD$$

In this manner, a tax with multiple rates may be included in the computation of the total price 60 by applying more than one tax rate to a single pricing component and the different tax rate may be taken into consideration according to scaled ranges of price amounts.

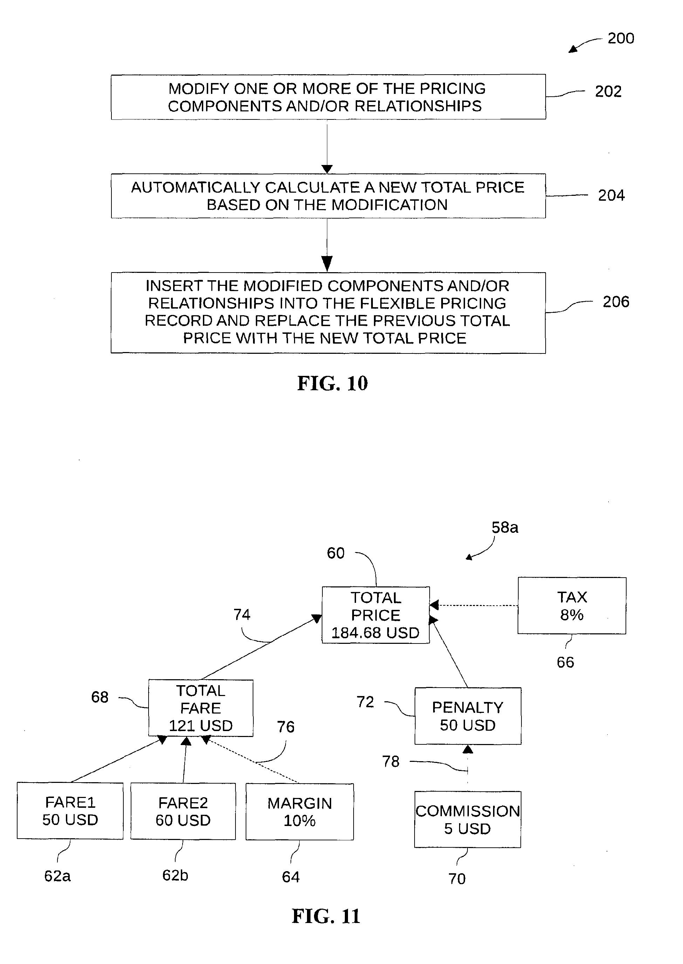

FIG. 10 illustrates a process 200 for modifying a flexible pricing record 58 that may be implemented by the processing architecture 50. In block 202, one or more of the pricing components and/or relationships of the flexible pricing record 58 may be modified. For example, an agent or customer, such as through the agency system 20 or the customer system 18, may instruct the pricing system 54 to add, remove, move, or alter a pricing component or a relationship of a flexible pricing record 58.

In response to the modification of the pricing components and/or relationships, a new total price 60 may be calculated based on the modification in block 204. In one embodiment, the calculation may automatically occur in real-time as the modification is made. For example, when a pricing component is moved, the relationship assigned to the pricing component may be eliminated such that the pricing component is temporarily disassociated from the rest of the flexible pricing record 58. The pricing component may be re-associated with the flexible pricing record 58 when the movement is complete and a relationship again links the pricing component to a different pricing component or the total price 60. Consequently, as a pricing component is moved within the flexible pricing record 58, the pricing system 54 may automatically recalculate the total price 60 without the moved pricing component, and thereafter automatically recalculate the total price 60 with the pricing component in its new position. Once the new total price 60 is calculated, in block 206, the prior data on which the flexible pricing record 58 was based may be transformed into new data by inserting the modified component and/or relationships into the prior data and replacing the previous total price 60 with the newly calculated total price 60 in the prior data. The flexible pricing record 58 may be updated at least one data storage device (e.g., the mass storage memory device 32 of the computer system 26) hosting the dynamic pricing database 56 to reflect the modified pricing components and/or relationships and the new total price 60.

Calculation of a new total price 60 based on a modification will now be described in more detail with reference to FIG. 12. FIG. 12 illustrates the flexible pricing record 58a (FIG. 4), but with the tax pricing component 66 having been moved from being applied on the interim total fare pricing component 68 to being applied on the total price 60. Once the movement of the tax pricing component 66 is finished such that the tax pricing component 66 is re-associated with the flexible pricing record 58a via a relationship, calculation of a new total price 60 may take place as follows:

$$TOTAL\ PRICE = (TOTAL\ FARE + PENALTY) \times TAX$$

$$TOTAL\ FARE = (FARE1 + FARE2) \times MARGIN = (50+60)*1.1 = 121\ USD$$

$$TOTAL\ PRICE = (121+50) \times TAX = 171*1.08 = 184.68\ USD$$

As previously described, the pricing system 54 may perform all are part of the processes 100 and 200 based on input received from a customer or agent, such as via the customer system 18 or the agency system 20 of the operating environment 10. In one embodiment, the pricing system 54 may provide a GUI to the customer or agent to enable the creation and/or modification of a flexible pricing record 58. For example, the GUI may display a visual representation of the flexible pricing record 58 to the customer or agent such that all of the pricing components and the total price 60 are displayed in the hierarchal arrangement. The customer or agent may then use input devices, such as a keyboard or mouse, to manipulate the displayed hierarchal arrangement. More particularly, the customer or agent may create, add, remove, or modify pricing components, relationships, view types, and/or rules by interacting with the displayed hierarchal arrangement of pricing components. When the customer or agent interacts with the GUI, the pricing system 54 may perform the blocks of processes 100 and 200, as necessary.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer readable program instructions for carrying out operations of the embodiments of the invention may be, for example, assembly language or either source code or object code written in any combination of one or more programming languages.

Various program code described herein may be identified based upon the application within that it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions, acts, and/or operations specified in the flowcharts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flowcharts, sequence diagrams, and/or block diagrams.

In certain alternative embodiments, the functions, acts, and/or operations specified in the flowcharts, sequence diagrams, and/or block diagrams may be re-ordered, processed serially, and/or processed concurrently consistent with embodiments of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of', or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

**Claims**

1. A method for implementing a dynamic pricing database, the method comprising:

   generating, by at least one processor, first data that represents a plurality of pricing components;
   assigning, by the at least one processor, a plurality of relationships to the pricing components such that each pricing component is linked by one of the relationships with a different pricing component or with a first total price in a hierarchal arrangement based upon the relationships; and
   building, by the at least one processor, a flexible pricing record for the dynamic pricing database based on the first data representing the pricing components and the relationships.

2. The method of claim 1, wherein each relationship includes a link type that indicates an effect of the respective pricing component linked by the relationship with the different pricing component or with the first total price.

3. The method of claim 2, wherein the effect of the respective pricing component indicated by the link type is selected from the group consisting of the respective pricing component being included in the first total price or in the different pricing component to which the respective pricing component is linked, the respective pricing component being applied on the first total price or on the different pricing component to which the respective pricing component is linked, and the respective pricing component serving an informative purpose without influencing the first total price or the different pricing component to which the respective pricing component is linked.

4. The method of any of claims 1 to 3, further comprising:

   assigning a plurality of view types to the pricing components such that each pricing component is associated with one of the view types,
   wherein the view type assigned to each respective pricing component is associated with one or more permissions levels for accessing the respective pricing component, and the flexible pricing record is built based on the view types.

5. The method of claim 4, wherein the view type of each pricing component is selected from the group consisting of a customer view, a provider view, and a travel agent view.

6. The method of any of claims 1 to 5, further comprising:

   establishing a first connection for data communication between at least one data storage device that hosts the dynamic pricing database and a pricing system that includes the at least one processor; and
   transmitting the flexible pricing record from the pricing system to the at least one data storage device via the first connection for inclusion in the dynamic pricing database.

7. The method of claim 6, further comprising:

   establishing a second connection for data communication between the pricing system and a travel agency system,
   wherein the at least one processor of the pricing system generates the first data and assigns the relationships based on information received at the pricing system over the second connection from the travel agency system.

8. The method of any of claims 1 to 7, wherein building the flexible pricing record for the dynamic pricing database based on the first data representing the pricing components and the relationships comprises:

> calculating the first total price based on the pricing components and the relationships; and
> transforming the first data into second data by inserting the relationships and the first total price into the first data, wherein the flexible pricing record is based on the second data.

9. The method of claim 8, further comprising:

> modifying one or more of the pricing components and/or one or more of the relationships;
> in response to the modification, automatically calculating a second total price based on the modification; and
> transforming the second data into third data by inserting the modified one or more pricing components and/or the modified one or more relationships into the second data and replacing the first total price with the second total price.

10. The method of any of claims 1 to 9, further comprising:

> assigning a rule to a first one of the pricing components,
> wherein building the flexible pricing record for the dynamic pricing database based on the first data representing the pricing components and the relationships comprises calculating the first total price based on the pricing components and the relationships such that the calculation of the first total price is based on the first pricing component only if the rule is satisfied.

11. The method of claim 10, wherein the first pricing component is linked to a second one of the pricing components and includes a percentage that, when the first total price is calculated, is applied on the second pricing component only if the rule assigned to the first pricing component is satisfied.

12. The method of claim 11, wherein the first pricing component is applied on the second pricing component only if the second pricing component exceeds a threshold value comprised by the rule.

13. The method of any of claims 1 to 12, further comprising:

> calculating the first total price based on the pricing components and the relationships, wherein the relationships assigned to at least two of the pricing components indicate an order of application of the at least two of the pricing components when calculating the first total price.

14. A system for implementing a dynamic pricing database, the system comprising:

> at least one processor; and
> a memory storing instructions that, upon execution by the at least one processor, cause the system to perform the method of any of claims 1 to 13.

15. A computer program for implementing a dynamic pricing database comprising
computer instructions that, upon execution by at least one processor, cause the at least one processor to perform the method of any of claims 1 to 13.

**FIG. 1**

**FIG. 2**

**FIG. 3**

**FIG. 4**

FIG. 5

FIG. 6

FIG. 7

FIG. 8

FIG. 9

200

```
┌─────────────────────────────────────────┐
│  MODIFY ONE OR MORE OF THE PRICING       │── 202
│  COMPONENTS AND/OR RELATIONSHIPS         │
└─────────────────────────────────────────┘
                    │
                    ▼
┌─────────────────────────────────────────┐
│  AUTOMATICALLY CALCULATE A NEW TOTAL PRICE │── 204
│  BASED ON THE MODIFICATION               │
└─────────────────────────────────────────┘
                    │
                    ▼
┌─────────────────────────────────────────┐
│  INSERT THE MODIFIED COMPONENTS AND/OR   │
│  RELATIONSHIPS INTO THE FLEXIBLE PRICING │── 206
│  RECORD AND REPLACE THE PREVIOUS TOTAL   │
│  PRICE WITH THE NEW TOTAL PRICE          │
└─────────────────────────────────────────┘
```

**FIG. 10**

58a

60

74

TOTAL
PRICE
184.68 USD

TAX
8%

66

68

TOTAL
FARE
121 USD

76

72

PENALTY
50 USD

78

FARE1
50 USD

FARE2
60 USD

MARGIN
10%

COMMISSION
5 USD

62a          62b          64          70

**FIG. 11**

Europäisches
Patentamt

European
Patent Office

Office européen
des brevets

# EUROPEAN SEARCH REPORT

Application Number

EP 15 29 0113

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/054316 A1 (SCIENT REVENUE INC [US]; GROSSO WILLIAM [US]) 16 April 2015 (2015-04-16) * the whole document * ----- | 1-15 | INV. G06Q30/02 G06Q50/14 |
| X | US 2012/036089 A1 (WASHINGTON STEVEN M [US] ET AL) 9 February 2012 (2012-02-09) * the whole document * ----- | 1-15 | |
| X | US 2015/073872 A1 (BADER EMIL [IL]) 12 March 2015 (2015-03-12) * the whole document * ----- | 1-15 | |
| X | US 2005/125364 A1 (EDMONDSON DAVID J [US] ET AL) 9 June 2005 (2005-06-09) * the whole document * ----- | 1-15 | |

TECHNICAL FIELDS
SEARCHED      (IPC)

G06Q

The present search report has been drawn up for all claims

| Place of search | Date of completion of the search | Examiner |
|---|---|---|
| Munich | 17 September 2015 | Mülthaler, Evelyn |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 29 0113

This annex lists the patent family members relating to the patent documents cited in  the above-mentioned European search report.
The members are as contained in the European Patent Office EDP file on
The European Patent Office is in no way liable for these particulars which are merely given for the purpose of information.

17-09-2015

| Patent document cited in search report | | Publication date | Patent family member(s) | | Publication date |
|---|---|---|---|---|---|
| WO 2015054316 | A1 | 16-04-2015 | NONE | | |
| US 2012036089 | A1 | 09-02-2012 | US 2012036089 A1 | | 09-02-2012 |
| | | | WO 2012019097 A2 | | 09-02-2012 |
| US 2015073872 | A1 | 12-03-2015 | NONE | | |
| US 2005125364 | A1 | 09-06-2005 | US 2005125364 A1 | | 09-06-2005 |
| | | | WO 2005060511 A2 | | 07-07-2005 |

EPO FORM P0459

For more details about this annex : see Official Journal of the European Patent Office, No. 12/82